# FASCICULE DE BREVET EUROPEEN

(11) **EP 3 393 238 B1**
(45) Date de publication et mention de la délivrance du brevet: **11.09.2019**
(21) Numéro de dépôt: 16825572.7
(22) Date de dépôt: 22.12.2016
(51) Int. Cl.: A01N 25/02, C11D 7/26, C11D 7/50

(54) **COMPOSITION DISPERSANTE**
DISPERSIONSZUSAMMENSETZUNG
DISPERSANT COMPOSITION

(30) Priorité: 23.12.2015 FR 1563196; 19.07.2016 FR 1556871
(43) Date de publication de la demande: 31.10.2018
(73) Titulaire: Oleon N.V., 9940 Evergem (Ertvelde) (BE)
(72) Inventeur: SAVOIS, Blandine, 60280 Venette (FR); ZITOUNI, Karima, 91420 Morangis (FR); RAVIER, Pierre, 60200 Compiegne (FR)
(74) Mandataire: Santarelli
(86) Numéro de dépôt international: PCT/IB2016/057945
(87) Numéro de publication internationale: WO 2017/109751

(56) Documents cités:
- WO-A1-99/10438
- WO-A1-2012/123408
- US-B1- 6 673 157
- "Fil-Ester 618/618K Coconut Methyl Ester", INTERNET CITATION, 2009, page 1, XP002758932, Extrait de l'Internet: URL:http://www.guanshinyeh.com.tw/upload/F il-ester%20618-618K.pdf [extrait le 2015-06-20]

## Description

### Domaine de l'invention

La présente invention concerne une composition permettant le nettoyage, la dispersion, la désagrégation, la solubilisation et/ou la dissolution, partiel ou total, de substances peu ou pas hydrophiles, et en particulier de polyuréthane.

### Art antérieur

Le diméthylsulfoxyde (DMSO), est un composé de formule brute (CH₃)₂SO, de poids moléculaire 78.13 g/mol et de numéro CAS: 67-68-5. Ce composé très polaire est un solvant de divers polymères et résines organiques et peut être utilisé pour nettoyer des résidus de peintures ou de copolymère styrèniques. Cependant, son point de cristallisation élevé (18°C) en fait un composé difficile à manipuler et à conserver.

La publication de la demande de brevets aux Etats-Unis US2003/104960 (OPRE et al) décrit un mélange complexe de DMSO, de deux esters (un diester d'acides carboxyliques en C3-C10, et un ester d'acide lactique (C3H6O3)) d'un carbonate et d'une amine tertiaire. Cette composition est utilisée pour le nettoyage de résidu de copolymères à base de styrène et d'acrylonitrile.

La publication de la demande de brevets aux Etats-Unis US2011212867 (LALLIER et al) enseigne l'utilisation qu'un composé modérément polaire choisi dans le groupe des éthers, cétones et esters pour être associé au DMSO pour obtenir des effets synergétiques. Ce document décrit l'association d'un diol et d'un triol pour réaliser une composition nettoyante comprenant du DMSO de manière à abaisser son point de cristallisation et permettre une utilisation de la composition en extérieur à des températures inférieures à 18°C. Le pouvoir de décapage de couches de peintures d'une telle composition est équivalente à du DMSO pur. Cependant la présence de groupes fonctionnels hydroxyles susceptibles de réagir avec d'autres composés est un inconvénient.

Le brevet des Etats-Unis US6,673,157 décrit des compositions pour le nettoyage l'enlèvement ou le décapage (« stripping ») de couches de peinture qui comprennent notamment le mélange d'un ester et de DMSO. Une des compositions exemplifiées comprend du lactate d'éthyle qui est un composé qui possède des propriétés décapantes de peintures à base de polyuréthane. Cependant un tel composé est inefficace pour le décapage et/ou la désagrégation de mousses en polyuréthane.

Les résidus solides de type mousse de polyuréthane sont particulièrement difficiles à éliminer et le solvant actuellement utilisé est le N-Méthyl-2-pyrolidone (NMP), solvant toxique et dangereux.

Une mousse de polyuréthane se distingue d'un polyuréthane par le fait qu'un gaz est incorporé dans le produit final du fait de la présence lors de la polymérisation d'un agent d'expansion tel que du CO₂. Le produit obtenu contient une dispersion d'alvéoles de gazdans un réseau polymère. La densité apparente de telles mousses de polyuréthane est généralement inférieure à 100 kg/m3, par exemple de 5 à 80kg/m3. Elle peut cependant être supérieure à ces densités et atteindre les 400 kg/m3. La densité apparente d'une mousse de polyuréthane peut être déterminée selon la norme ISO 845. Ce n'est pas seulement le polymère formé qui contribue aux propriétés de la mousse, mais également, la structure alvéolaire formée par le gaz. Pour désagréger une mousse, le solvant doit pouvoir pénétrer la mousse.

L'invention a pour but de remédier aux inconvénients sus-cités en fournissant une composition de toxicité réduite, moins polluante pour l'environnement et présentant un indice de biodégradabilité amélioré, qui comprend du DMSO et qui permet d'obtenir des résultats et/ou des propriétés au moins équivalent au DMSO pur et/ou aux compositions à base de DMSO déjà connues, sans en avoir les inconvénients.

### Description de l'invention

De manière inattendue il a été trouvé qu'en mélangeant du DMSO et un ester méthylique d'acide gras dans des proportions particulières on obtenait une composition au pouvoir dispersant, désagrégeant, solubilisant et/ou la dissolvant au moins équivalent, et dans certains cas augmenté, par rapport au DMSO pur.

Selon un mode de réalisation, l'invention porte sur une composition comprenant, consistant essentiellement ou consistant en :
- au moins 30% de diméthylsulfoxide (DMSO), et
- au moins 20% d'un ester méthylique d'acide gras ou d'un mélange de tels esters, ledit acide gras comprenant, ou ayant, de 4 à 22 atomes de carbone, de préférence de 4 à 12 atomes de carbone, avantageusement de 6 à 10 atomes de carbone et encore plus préférentiellement de 8 à 10 atomes de carbone ;
ces pourcentages étant en masse de la masse totale de la composition.

Les esters méthyliques d'acides gras ne présentent aucun pouvoir dissolvant ou désagrégeant en tant que tel envers des composés à base de mousses de polyuréthane. Cependant, même présents en forte proportion, voir en proportion majoritaire, la présence d'esters méthyliques, non seulement n'abaisse pas l'efficacité du DMSO, mais peut l'améliorer.

Un ester méthylique d'acide gras est un alkanoate de méthyle à chaine aliphatique, ladite chaine pouvant être branchée ou linéaire, saturée ou insaturée. Les acides gras sont de préférence d'origine végétale/animale. Ils peuvent provenir par exemple de l'huile de palme, de coprah, de palmiste ou de tournesol.

L'expression « consistant essentiellement en » porte notamment sur le fait que si d'autres composants sont présents dans la composition, ceux-ci n'ont pas d'effets techniques liés à l'invention. Alternativement ou additionnellement, cette expression peut également s'interpréter comme portant sur une composition qui, en masse ne comprend pas plus que 10%, éventuellement pas plus que 5%, en masse par rapport à la masse totale de la composition de composé autres que ceux mentionnés dans la composition. Des esters méthyliques d'acides gras en C8 et C10 (c'est-à-dire dont les acides gras comprennent 8 ou 10 atomes de carbone) ont montré une synergie particulière en association avec le DMSO. De même des esters méthyliques en C6 ont également montré des propriétés particulières lorsque associés au DMSO. Alternativement des esters d'acides gras en C6, C12, C14, C16 peuvent également être utilisés. Il en est de même pour des esters en C7, C9, C11, C13 et C15.

Les esters méthyliques d'acides gras peuvent être utilisés purs ou en mélanges dans la composition. Ainsi un mélange d'esters comprenant, ou consistant essentiellement en, esters méthyliques en C8 et C10, éventuellement en association avec un ou plusieurs esters méthyliques en C6, peut aboutir à une composition présentant un fort pouvoir dissolvant. Dans ce mélange, la proportion d'ester(s) méthylique(s) d'acides gras en C8 peut varier de 45 à 69%, de préférence de 48 à 65%, en masse par rapport à la masse totale du mélange d'esters. La proportion d'ester(s) méthylique(s) d'acides gras en C10 peut varier de 31 à 55%, de préférence de 35 à 50%, en masse par rapport à la masse totale du mélange d'esters.

Cependant la concentration relative en masse des ester(s) méthylique(s) d'acides gras en C6 par rapport aux autres ester(s) méthylique(s) est avantageusement inférieure ou égale à 10%, de préférence inférieure ou égale à 5, ou 4,5,%, par exemple de 1 à 5, ou 4,5,%.Un tel mélange peut être un produit d'origine naturel et peut donc contenir une faible proportion d'autres esters, par exemple en C6 (<1%) ou C12 (<2%).

L'ester de méthyle ricinoléate (C18:10H>87%,(C18:1, C18:2, C18:3; C18,C16 <13%)), est un mélange d'esters, généralement issu de l'huile de ricin, qui peut être avantageusement utilisé dans la composition selon l'invention.

L'acide gras de l'ester méthylique d'acide gras peut également comprendre, ou avoir, de 4 à 10 atomes de carbone, de préférence de 8 à 10 atomes de carbone.

La proportion de l'ester méthylique ou du mélange d'esters méthyliques d'acide gras est de préférence d'au moins 25%, 27%, 35%, 40%, 45%, 50%, 55% ou 60% en masse par rapport à la masse totale de la composition.

Alternativement, la proportion de l'ester méthylique, ou du mélange d'ester méthylique, d'acide gras est de préférence d'au plus 25%, 27%, 35%, 40%, 45%, 50%, 55% 60% ou 70% en masse par rapport à la masse totale de la composition.

La proportion d'ester(s) méthylique(s) peut ainsi aller de 20% à 70%, de 30% à 60%, et/ou de 40 à 50%.

La proportion de DMSO est de préférence d'au plus 75%, 70%, 65%, 60%, 55%, 50%, 45%, 40% ou 35% en masse par rapport à la masse totale de la composition. Alternativement la proportion de DMSO est de préférence d'au moins 35%, 40%, 45%, 50% ou 55% en masse par rapport à la masse totale de la composition.

La proportion de DMSO comprise dans le mélange peut ainsi aller varier de 30% à 75%, de 35% à 60%, de 40 à 50%, et/ou de 36 à 44 %.

La composition selon l'invention peut ainsi comprendre au moins 35% de DMSO et au moins 25 % dudit ester méthylique, ou d'un mélange de tels esters.

Selon un mode de réalisation préféré, la composition selon l'invention ne contient essentiellement que du DMSO et au moins un ester méthylique d'acide gras (EMAG) ou un mélange de tels esters. Le rapport des masses de DMSO/EMAG(s) peut alors avantageusement être d'environ 40/60.

La composition selon l'invention peut comprendre en outre au moins 5%, de préférence au moins 10%, en masse d'un autre composé, ledit composé étant choisi dans le groupe constitué par la triacétine (cas n° 102-76-1) ou 1,3-diacétyloxypropan-2-yl acétate (IUPAC), le monolaurate diacétate de glycérol, le dilaurate acétate de glycérol, l'ester diméthyle isosorbide (DMI) (cas number : 93920-28-6 / RADIA 7926 société OLEON) et l'isostéramide (un mélange de laurylamide DEA (cas n°92680-75-6, société Antaichem) et de cocamide DEA (cas n°=68603-42-9 ; société CHEMOS) et les mélanges de ceux-ci.

Le monolaurate diacétate de glycérol est un composé chimique de formule chimique linéaire est C19H34O6 et son numéro CAS : 30899-62-8.

La quantité de cet autre composé peut être de plus de 15%, de plus de 20% ou de plus de 25% en masse de la masse totale de la composition.

La quantité de cet autre composé peut être de moins de 30%, de moins de 25%, de moins de 20%, ou de moins de 15% en masse de la masse totale de la composition.

La proportion de cet autre composé peut ainsi aller de 5% à 50%, 10 à 40 %, de 20 à 30% et/ou de 15 à 25 % en masse par rapport à la masse totale de la composition.

De préférence, la composition selon l'invention contient un mélange de composés, en particulier un mélange de monolaurate diacétate de glycérol et de dilaurate acétate de glycérol ou une mélange de DEA tel que l'isotéramide. Une telle composition est particulièrement efficace, stable, simple d'utilisation et présente un impact environnemental et une toxicité réduite. Ainsi, les rapports de masses des composants DMSO/EMAG(s)/C d'une telle composition, peuvent être d'environ 40/30/30, 40/40/20 ou 30/45/25.

Alternativement la composition est constituée pour plus de 85% en masse de DMSO et dudit ester méthylique d'acide gras, ou de ses mélanges tel que décrits ci-dessus, ce pourcentage étant en masse par rapport à la masse totale de la composition.

La composition selon l'invention peut être utilisée pure ou diluée.

De manière avantageuse la composition selon l'invention ne contient pas de triols, de diols et/ou d'alcool en général.

La composition selon l'invention peut également ne pas contenir d'éthyle lactate, d'alkyl lactates (esters lactate) et/ou de diesters.

La composition selon l'invention peut avantageusement ne pas contenir de solvants apolaires tels que, par exemple, des hydrocarbures aliphatiques et/ou des hydrocarbures aromatiques, ceux-ci pouvant être, ou non, halogénés.

L'invention porte également sur l'utilisation d'une composition telle que précédemment décrite comme agent nettoyant, dispersant, désagrégeant, solubilisant ou dissolvant de composés organiques, par exemple de polymères. Cette utilisation comporte une étape de mise en contact entre la composition selon l'invention et le, ou les, composés organiques à traiter.

En particulier la composition peut être utilisée comme agent nettoyant de mousses de polyuréthane ou comme agent de dispersion de pesticides. Plus particulièrement, la composition peut être utilisée comme agent solubilisant d'un composé actif, tel qu'un pesticide (par exemple le Clodinafop propargyl ou le Difenoconazole).

Le composé actif est généralement un composé organique, de préférence en C12-C25. Il comporte avantageusement au moins 2 cycles aromatiques, qui peuvent être liés l'un à l'autre, directement ou non, par l'intermédiaire d'un atome d'oxygène. Ainsi, le composé actif peut comprendre une fonction éther, de préférence 2 et encore plus préférentiellement 3 fonctions éthers (-O-). Les cycles aromatiques peuvent être identiques ou différents, en particulier ils peuvent être des cycles aromatiques ne comprenant que des atomes de carbone et/ou être des cycles hétéro-aromatiques, c'est-à-dire comprenant au moins un hétéroatome tel que de l'azote ou de l'oxygène. De préférence, au moins un de ces cycles est un cycle à 6 atomes. Le composé actif peut ainsi être un composé organique ayant de 15 à 21 atomes de carbone, 2 cycles aromatiques à 6 atomes, lesdits cycles étant liés directement l'un un l'autre par un atome d'oxygène, et comprenant 3 fonctions éthers.

Le composé actif peut en particulier être un aryloxyphénoxypropionate et/ou un hétéroaryloxyphénoxypropionate.

Une composition comprenant une composition selon l'invention telle que décrite ci-avant ainsi qu'un composé actif, de préférence en solution, est également un objet de l'invention.

Un procédé de synthèse d'une composition selon l'invention telle que décrite ci-avant est également un objet de l'invention. Un tel procédé comprend une étape de mélange du DMSO avec ledit ou lesdits ester(s) méthylique(s) d'acide gras.

### Exemples de compositions selon l'invention et tests comparatifs

### Exemple 1

Les composés utilisés pour réaliser les compositions décrites dans ces exemples sont les suivants :
- DMSO de qualité standard/technique (fournisseur la société ARKEMA).
- Un mélange d'esters méthyliques d'acides gras (EMAGs), ces acides gras étant majoritairement (par exemple à plus de 90% en masse) des acides gras en C8 et C10 (No. CAS 85566-26-3 et No. CE : 287-636-4). Le mélange utilisé est celui commercialisé sous la marque Radia 7983 par la société OLEON, qui contient 4,5%, ou moins, d'ester méthylique d'acide gras en C6. La teneur en C8 du mélange varie de 48 à 65%, en masse et la teneur en C10 varie de 35 à 50% en masse.
- Un mélange de monolaurate diacétate de glycérol et de dilaurate acétate de glycérol de marque Radia 7909 (fournisseur société OLEON).
- DMI (éther diméthyle isosorbide) (No. CAS 5306-85-4 et No. EC 226-159-8)
- R7926 isostéramide
- Mélange de laurylamide DEA et de cocamide DEA (No. CAS : 68603-42-9 et No. EC : 271-657-0)

Pour réaliser les compositions (ou formules) nettoyantes selon l'invention, les différents composés ont été pesés, puis mélangés manuellement les uns aux autres dans un bécher en verre à l'aide d'une spatule en métal. Le mélange a été effectué à température ambiante (21 °C). Aucun ordre d'introduction n'a été suivi en particulier. Une fois tous les ingrédients de la composition introduits, l'agitation a été maintenue pendant environ 10mn.

Les compositions comparatives permettant de mettre en évidence les propriétés des compositions selon l'invention ont été obtenues selon le même procédé.

Les compositions de l'invention A à H ont été synthétisées selon le procédé décrit ci-dessus. Les formulations de ces compositions sont décrites dans le Tableau I.

**TABLEAU I :**

| Composition | DMSO* | Radia 7983 | Radia 7909 | DMI | R7926 |
|---|---|---|---|---|---|
| A | 40% | 60% | / | / | / |
| B | 40% | 30% | 30% | / | / |
| C | 40% | 40% | 20% | / | / |
| D | 40% | 50% | / | 10% | / |
| E | 40% | 25% | 25% | 10% | / |
| F | 40% | 35% | 15% | 10% | / |
| G | 40% | 40% | / | / | 20% |
| H | 30% | 45% | 25% | / | / |

| | | | | | |
|---|---|---|---|---|---|
| *en masse par rapport a la masse totale de la composition | | | | | |

### Exemple 2 : Mesures de fermeté (force maximale) :

Pour évaluer le ramollissement d'une mousse en polyuréthane après un contact avec des compositions selon l'invention, et donc leur pouvoir désagrégeant/de dissolution, la fermeté d'une mousse traitée avec des compositions selon l'invention a été testée. De plus les mêmes mousses ont été traités par les composés (ingrédients) de la composition, soit seuls, soit en couple, soit avec un solvant amorphe (l'eau) pour établir l'action synergique des compositions selon l'invention.

Par fermeté il est entendu la force requise pour atteindre une déformation prédéfinie de la surface du produit testé. Cette force est exprimée en newtons (N).

Les mesures de fermeté ont été effectuées avec le Texturomètre de marque TA1 de la société Lloyd Instruments. Le test a été réalisé de la manière suivante pour toutes les compositions et ingrédients testés:
Des carrés de mousse polyuréthane rigide de surface 2,5 cm x 2,5 cm et d'épaisseur de 12 mm ont été placés dans des conteneurs de 25ml avec 20 g de compositions selon l'invention pendant 1 heure et 2 heures. Le Texturomètre a été muni d'une sonde cylindrique (diamètre 12 mm, hauteur 50 mm).

Une précontrainte de 0,2 N a été appliquée à une vitesse de 100 mm / s.

La vitesse de descente de la sonde est de 20 mm / sec et la profondeur de pénétration de la sonde est de 8 mm. Les résultats sont présentés dans le tableau suivant :
La fermeté de la mousse de polyuréthane rigide, testée dans les mêmes conditions que décrites ci-dessus, est de 43N.

| Temps de contact de la formulation avec la mousse : | 1 heure Force en Newton (N) | 2 heures Force en Newton (N) |
|---|---|---|
| A | 0,56104 | 0,54161 |
| B | 0,52259 | 0,48863 |
| DMSO pur | 0,74766 | 0,5567 |
| DMSO/eau (40/60)* | 36,003 | 35,21 |
| Radia 7983 | 19,71 | 18,77 |
| Radia 7909 | 36,842 | 35,070 |
| DMSO/7909 (40/60)* | 23,886 | 1,840 |
| Radia 7983/ Radia 7909 (30/70)* | 31,070 | 27,809 |

| | | |
|---|---|---|
| *en pourcentage massique de la composition totale | | |

Plus la force exercée par la sonde est faible moins la mousse sera rigide est plus la formulation aura dégradé la mousse.

Il est ainsi démontré que, de manière surprenante, des compositions selon l'invention qui comprennent une proportion réduite de DMSO présentent une capacité de désagrégation de mousses de polyuréthane, au moins égale, voire supérieure au DMSO pur ou dilué et que cette désagrégation s'effectue de manière plus rapide.

### Exemple 3 : Mesures de désagrégation : évaluation visuelle

Les résultats par Texturomètre sont cohérents avec les mesures de désagrégation visuelles présentées ci-après et qui ont été effectuées de manière préliminaires sur les mêmes mousses de polyuréthanes rigides que celles utilisées dans le test précédent.

Protocole : des échantillons de mousses de polyuréthanes de volume et de forme comparables sont chacun placés dans un bécher et mis en contact avec la composition.

A intervalle de temps, les échantillons ont été prélevés à l'aide de pinces et leurs textures est évalué par pression d'une spatule et visuellement, puis replacé dans le bécher. Une note a été attribuée par le testeur sur une échelle de 0 à 3 (Tableau II) et les résultats sont compilés dans le tableau II.

**Tableau II**

| Composition | Note à 40 minutes | Note à 1h | Note à 2h | Note à 3h |
|---|---|---|---|---|
| A | 2 | 3 | 3 | 3 |
| B | n/m | 3 | 3 | 3 |
| C | 2 | 3 | 3 | 3 |
| D | n/m | 2 | 2 | 2 |
| E | n/m | 3 | 3 | 3 |
| F | n/m | 3 | 3 | 3 |
| G | n/m | 2 | 2 | 3 |
| DMSO pur | 2 | 2 | 2 | 3 |
| DMSO/7983 (20/80)* | 1 | 1 | 2 | 2 |
| Radia 7909 | 0 | 0 | 0 | n/m |
| Radia 7983 | 0 | 0 | 0 | n/m |
| Radia 7909/7983 (30/70)* | 0 | 0 | 0 | n/m |
| DMSO/7909 (40/60) | 0 | 0 | 0 | n/m |

| | | | | |
|---|---|---|---|---|
| n/m = non mesure *en pourcentage massique par rapport à la masse totale de la composition | | | | |

Echelle de notation de l'évaluation visuelle du pouvoir désagrégeant de la composition

| |
|---|
| 0 = aucune action |
| 1 = faible action |
| 2 = bonne action |
| 3 = très bonne action |

Ces observations permettent d'établir l'efficacité particulière des compositions selon l'invention.

### Exemple 4 : Composition selon l'invention et son utilisation pour la solubilisation d'actif phytosanitaire tel que le Clodinafop propargyl.

### Produits utilisés

- DMSO (Grade technique Arkema)
- Mélange d'ester méthylique (Radia 7983 - OLEON)
- Triacétine (No. CAS 102-76-1) ou 1,3-diacétyloxypropan-2-yl acétate (IUPAC) commercialisée par la société Alfa Aesar. 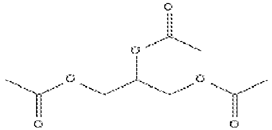
- le méthyl-5-(diméthylamino)-2-méthyl-5-oxopentoate; CAS N° : 1174627 - 68 - 9 une ester amide commercialisé sous la marque Rhodiasolv Polarclean par la société Rhodia.
- **Clodinafop** propargyl (No. CAS 105512-06-9) un herbicide de formule :

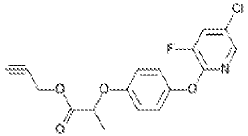

### Matériels:

- Flacons de 15mL
- Balance de précision 0,001g

### Mode opératoire:

Une composition H selon l'invention est préparée dans un flacon de 100mL, 40g de DMSO sont pesés puis y sont ajoutés 40g de Radia 7983 et 20g de triacétine. Le flacon est agité quelques secondes jusqu'à homogénéisation.

2,4g de Clodinafop propargyl sont pesés dans un flacon de 15mL, la masse est complétée à 10g en ajoutant la composition H.

A des fins de comparaison un a gent solubilisant à base d'ester amide, le Rhodiasolv Polarclean, est utilisé comme exemple témoin.2,4g de Clodinafop propargyl sont pesés dans un flacon de 15mL, auquel est ajouté du Rhodiasolv Polarclean afin d'obtenir une masse finale de 10g.

Les deux flacons sont agités manuellement pendant 3 à 4 minutes afin d'obtenir des mélanges homogènes et limpides.

**Résultats :**

| Formulations | Aspect après 7 jours à température ambiante |
|---|---|
| Composition H + 24% en masse de Clodinafop propargyl | Limpide et homogène |
| Rhodiasolv Polarclean + 24% en masse de Clodinafop propargyl (exemple témoin) | Limpide et homogène |

La composition H selon l'invention solubilise parfaitement l'herbicide, et la formulation ainsi obtenue reste stable, limpide et homogène, à température ambiante.

### Exemple 5 : Compositions selon l'invention et leur utilisation pour la solubilisation d'un actif phytosanitaire tel que le Difenoconazole (pesticide).

### Produits utilisés

- DMSO (Grade technique Arkema)
- Mélange d'esters méthyliques (Radia 7983 - OLEON)
- Triacétine (No. CAS 102-76-1) ou 1,3-diacétyloxypropan-2-yl acétate (IUPAC) commercialisée par la société Alfa Aesar. 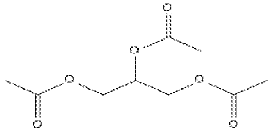
- l'hexanoate de méthyle (Sigma Aldrich)
- Difenoconazole (No. CAS 119446-68-3) de Yifan Biotechnology group Co., LTD, pur à au moins 95% et de formule :

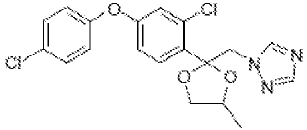

Des compositions selon l'invention sont réalisées en mélangeant du Difenoconazole avec des compositions solubilisantes selon l'invention. La composition H décrite ci-dessus est utilisée ainsi qu'une composition à base d'hexanoate de méthyle, de DMSO et de R7909. Ces formulations sont réalisées selon le même protocole que l'exemple 4 ci-dessus décrivant la solubilisation du Clodinafop Propargyl. Les pourcentages mentionnés sont des pourcentages en masse par rapport à la masse totale de la composition.

| **Formulations** | **Solubilisation du Difenoconazole à T_{amb} Aspect après 7 jours** | **Solubilisation du Difenoconazole à 0°C Aspect après 7 jours** |
|---|---|---|
| 40% DMSO (Arkema) + 40% Me C8/C10 (R7983) + 20% Triacétine | liquide limpide | liquide limpide |
| 40% DMSO (Arkema) + 40% hexanoate de méthyle (Sigma Aldrich) + 20% R7909 | liquide limpide | liquide limpide |

Les compositions selon l'invention solubilisent parfaitement le pesticide, et la formulation ainsi obtenue reste stable, limpide et homogène, à température ambiante et à 0°C.

### Exemple 6 : tests comparatifs de stabilité

Alors que les compositions selon l'invention A à H sont stables, il n'en est pas de même pour des mélanges de DMSO et d'esters de méthyle en C12 et C12/C14. Aussi les compositions selon l'invention, lorsque l'ester de méthyle est en C6-C10, permettent-elles d'obtenir à la fois des compositions stables et efficaces pour solubiliser des principes actifs et pour nettoyer et/ou éliminer des mousses de polyuréthanes ou leurs résidus.

Les mélanges ont été réalisés selon les mêmes modes opératoires que ceux-décrits ci-avant. Le laurate de méthyle (Radia 7118 de la société OLEON) est l'ester de méthyle en C12 (Me C12) et le laurate-myristate de méthyle (vendu sous la dénomination commerciale Edenor ME C12-14 MY par la société Emery) est un mélange d'esters de méthyle en C12 et C14 (Me C12C14). Les pourcentages mentionnés sont des pourcentages en masse par rapport à la masse totale de la composition. Les résultats sont les suivants :

| **Compositions** | **Aspect** |
|---|---|
| 40% DMSO + 40% Me C12 + 20% Triacétine | 2 phases |
| 40% DMSO + 40% Me C12C14 + 20% Triacétine | 2 phases |
| 40% DMSO + 40% Me C12 + 20% R7909 | 2 phases |
| 40% DMSO + 40% Me C12C14 + 20% R7909 | 2 phases |

Ces résultats montrent que l'utilisation d'esters méthyliques (en C12 et C14) autres qu'en C6-C10, ne permet pas l'obtention d'une composition ne comportant qu'une seule phase. L'ajout de triacétine ou de R7909 n'aide pas à la solubilisation des composés.

### Exemple comparatif 7 : Pouvoir décapant de l'éthyle lactate sur une peinture à base de polyuréthane et pouvoir désagrégeant de ce même composé sur une mousse de polyuréthane

### Matériel :

1 plaque en acier de dimension 20 X 10 cm
Ethanol
Peinture polyuréthane de couleur noire satin
Lactate d'éthyle, ou 2-hydroxypropanoate d'éthyle, (vendu par la société Sigma Aldrich)
Rouleau à peinture
Coton-tige
Pipette plastique 3 ml

### Protocole:

Préparation de la plaque de peinture :
   Sur une plaque en acier préalablement dégraissée avec de l'éthanol et séchée à l'aide d'air comprimé, une couche de peinture est appliquée à l'aide d'un rouleau. La peinture est laissée à sécher à l'air ambiant pendant 72 heures.

Application du lactate d'éthyle sur la plaque peinte :
Sur la plaque revêtue de peinture séchée, 3 gouttes de lactate d'éthyle sont déposées à l'aide d'une pipette.

La plaque est inclinée d'un angle de 20° pour permettre au lactate d'éthyle de parcourir les 10 cm de hauteur de la plaque.

Evaluation visuelle de l'action du lactate d'éthyle sur le décapage du film de peinture après contact avec le lactate d'éthyle :
Après 5 minutes de contact, un coton-tige est passé sur la surface correspondant au trajet (la coulure) du lactate d'éthyle, entrainant des films de peinture.

Conclusion : Le lactate d'éthyle décape une peinture polyuréthane.

Le lactate d'éthyle a été appliqué à de la mousse de PU selon le protocole de l'exemple 3 pour étudier ses propriétés de désagrégation. Les résultats obtenus ont été :

| Composition | Note à 40 minutes | Note à 1h | Note à 2h | Note à 3h |
|---|---|---|---|---|
| Lactate d'éthyle | 0 | 0 | 0 | 0 |

Ainsi, si certains esters d'alkyles ont un effet dissolvant sur des peintures à base de polyuréthane, la présence d'un tel effet n'est pas une indication de l'existence d'un effet désagrégeant de mousses de polyuréthane.

L'invention n'est pas limitée aux modes de réalisation présentés et d'autres modes de réalisation apparaîtront clairement à l'homme du métier.

## Revendications

1. Une composition comprenant :
- au moins 30% de diméthylsulfoxide, ou DMSO, et
- au moins 20% d'un ester méthylique d'acide gras ou d'un mélange de tels esters, ledit acide gras ayant de 6 à 10 atomes de carbone,
ces pourcentages étant en masse par rapport à la masse totale de la composition.

2. La composition selon la revendication 1, où ledit ester méthylique d'acide gras est un ester d'acide gras où ledit acide gras est un acide gras ayant 8 ou 10 atomes de carbone, ou un mélange de tels esters.

3. La composition selon la revendication 1 ou 2, ladite composition comprenant au moins 35% de DMSO et 25 % dudit ester méthylique ou dudit mélange de tels esters, ces pourcentages étant en masse par rapport à la masse totale de la composition.

4. La composition selon l'une quelconque des revendications 1 à 3, ladite composition comprenant de 36% à 44 % de DMSO, ces pourcentages étant en masse par rapport à la masse totale de la composition.

5. La composition selon l'une quelconque des revendications 1 à 4, ladite composition comprenant au moins 27% dudit ester méthylique ou desdits mélanges d'ester méthyliques, ce pourcentage étant en masse par rapport à la masse totale de la composition.

6. La composition selon l'une quelconque des revendications précédentes, ladite composition comprenant en outre au moins 5%, de préférence au moins 10%, en masse par rapport à la masse totale de la composition, d'un autre composé, ledit composé étant choisi dans le groupe constitué par la triacétine, le monolaurate diacétate de glycérol, le dilaurate acétate de glycérol, l'isotéramide et les mélanges de ceux-ci.

7. La composition selon l'une quelconque des revendications 1 à 6, ladite composition étant constituée pour plus de 85% du mélange dudit DMSO et dudit ester méthylique ou dudit mélange d'esters méthyliques, ce pourcentage étant en masse par rapport à la masse totale de la composition.

8. La composition selon l'une quelconque des revendications 1 à 7, ladite composition comprenant un aryloxyphénoxypropionate tel que le Difenoconazole ou le Clodinafop Propargyl.

9. La composition selon l'une quelconque des revendications 1 à 8, ledit mélange d'esters méthyliques étant constitué essentiellement :
- de 45 à 69%, de préférence 48 à 65%, d'ester(s) méthylique(s) d'acides gras en C8 ;
- de 31 à 55%, de préférence de 35 à 50%, d'ester(s) méthylique(s) d'acide gras en C10 ; et
- de 0 à 5%, de préférence de 0 à 4,5%, d'ester(s) méthylique(s) d'acide gras en C6 ;
ces pourcentages étant en en masse par rapport à la masse totale du mélange d'esters.

10. Utilisation d'une composition selon l'une quelconque des revendications 1 à 9, comme agent nettoyant, notamment comme agent nettoyant de mousses de polyuréthane.

11. Utilisation d'une composition selon l'une quelconque des revendications 1 à 9, comme agent de dispersion, notamment comme agent solubilisant de pesticides tels qu'un aryloxyphénoxypropionate.

12. Utilisation d'une composition selon la revendication 11, ou ledit pesticide est le Difenoconazole ou le Clodinafop Propargyl.

13. Procédé de synthèse d'une composition selon l'une quelconque des revendications 1 à 9, ledit procédé comprenant une étape de mélange du DMSO avec ledit, ou lesdits, ester(s) méthylique(s) d'acide gras.

## Patentansprüche

1. Zusammensetzung, umfassend:
- mindestens 30% Dimethylsulfoxid, oder DMSO, und
- mindestens 20% eines Fettsäuremethylesters oder einer Mischung solcher Ester, wobei die Fettsäure 6 bis 10 Kohlenstoffatome enthält,
wobei die Prozentanteile Massenanteile bezogen auf die Gesamtmasse der Zusammensetzung sind.

2. Zusammensetzung nach Anspruch 1, wobei der Fettsäuremethylester
ein Fettsäureester, bei dem die Fettsäure eine 8 oder 10 Kohlenstoffatome enthaltende Fettsäure ist, oder
eine Mischung solcher Ester ist.

3. Zusammensetzung nach Anspruch 1 oder 2, wobei die Zusammensetzung mindestens 35% DMSO und 25% des Methylesters oder der Mischung solcher Ester umfasst, wobei die Prozentanteile Massenanteile bezogen auf die Gesamtmasse der Zusammensetzung sind.

4. Zusammensetzung nach einem der Ansprüche 1 bis 3, wobei die Zusammensetzung 36% bis 44% DMSO umfasst, wobei die Prozentanteile Massenanteile bezogen auf die Gesamtmasse der Zusammensetzung sind.

5. Zusammensetzung nach einem der Ansprüche 1 bis 4, wobei die Zusammensetzung mindestens 27% des Methylesters oder der Mischungen von Methylestern umfasst, wobei der Prozentanteil ein Massenanteil bezogen auf die Gesamtmasse der Zusammensetzung ist.

6. Zusammensetzung nach einem der vorangehenden Ansprüche, wobei die Zusammensetzung mindestens 5, bevorzugt mindestens 10 Massen-%, bezogen auf die Gesamtmasse der Zusammensetzung, einer weiteren Verbindung umfasst, wobei die Verbindung ausgewählt ist aus der Gruppe bestehend aus Triacetin, Glycerinmonolauratdiacetat, Glycerindilauratacetat, Isosteramid und Mischungen derselben.

7. Zusammensetzung nach einem der Ansprüche 1 bis 6, wobei die Zusammensetzung zu mehr als 85% aus der Mischung des DMSO und des Methylesters oder der Mischung von Methylestern besteht, wobei der Prozentanteil ein Massenanteil bezogen auf die Gesamtmasse der Zusammensetzung ist.

8. Zusammensetzung nach einem der Ansprüche 1 bis 7, wobei die Zusammensetzung ein Aryloxyphenoxypropionat wie Difenoconazol oder Clodinafop-Propargyl umfasst.

9. Zusammensetzung nach einem der Ansprüche 1 bis 8, wobei die Mischung von Methylestern im Wesentlichen besteht aus:
- 45 bis 69%, bevorzugt 48 bis 65% C8-Fettsäure-Methylester(n);
- 31 bis 55%, bevorzugt 35 bis 50% C10-Fettsäure-Methylester(n); und
- 0 bis 5%, bevorzugt 0 bis 4,5% C6-Fettsäure-Methylester(n);
wobei die Prozentanteile Massenanteile bezogen auf die Gesamtmasse der Estermischung sind.

10. Verwendung einer Zusammensetzung nach einem der Ansprüche 1 bis 9 als Reinigungsmittel, insbesondere als Reinigungsmittel für Polyurethanschäume.

11. Verwendung einer Zusammensetzung nach einem der Ansprüche 1 bis 9 als Dispergiermittel, insbesondere als Lösungsvermittler für Pestizide wie ein Aryloxyphenoxypropionat.

12. Verwendung einer Zusammensetzung nach Anspruch 11, bei dem das Pestizid Difenoconazol oder Clodinafop-Propargyl ist.

13. Verfahren zur Herstellung einer Zusammensetzung nach den Ansprüchen 1 bis 9, wobei das Verfahren einen Schritt umfasst, in dem das DMSO mit dem oder den Fettsäuremethylester(n) vermischt wird.

## Claims

1. A composition comprising:
- at least 30% of dimethyl sulfoxide, or DMSO, and
- at least 20% of a fatty acid methyl ester or a mixture of such esters, said fatty acid having 6 to 10 carbon atoms,
these percentages being by mass with respect to the total mass of the composition.

2. The composition according to claim 1, wherein said fatty acid methyl ester is a fatty acid ester wherein said fatty acid is a fatty acid having 8 or 10 carbon atoms, or a mixture of such esters.

3. The composition according to claim 1 or 2, said composition comprising at least 35% of DMSO and 25 % of said methyl ester or of said mixture of such esters, these percentages being by mass with respect to the total mass of the composition.

4. The composition according to any one of claims 1 to 3, said composition comprising from 36% to 44 % of DMSO, these percentages being by mass with respect to the total mass of the composition.

5. The composition according to any one of claims 1 to 4, said composition comprising at least 27% of said methyl ester or of said mixtures of methyl esters, this percentage being by mass with respect to the total mass of the composition.

6. The composition according to any one of the preceding claims, said composition further comprising at least 5%, preferably at least 10%, by mass with respect to the total mass of the composition, of another compound, said compound being selected from the group constituted by triacetin, glycerol monolaurate diacetate, glycerol dilaurate acetate, isosteramide and mixtures thereof.

7. The composition according to any one of claims 1 to 6, more than 85% of said composition being constituted by the mixture of said DMSO and of said methyl ester or of said mixture of methyl esters, this percentage being by mass with respect to the total mass of the composition.

8. The composition according to any one of claims 1 to 7, said composition comprising an aryloxyphenoxypropionate such as Difenoconazole or Clodinafop-Propargyl.

9. The composition according to any one of claims 1 to 8, said mixture of methyl esters being essentially constituted by:
- from 45 to 69%, preferably from 48 to 65%, of C8 fatty acid methyl ester(s);
- from 31 to 55%, preferably from 35 to 50%, of C10 fatty acid methyl ester(s); and
- from 0 to 5%, preferably from 0 to 4.5%, of C6 fatty acid methyl ester(s);
these percentages being by mass with respect to the total mass of the mixture of esters.

10. Use of a composition according to any one of claims 1 to 9, as a cleaning agent, in particular as a cleaning agent for polyurethane foams.

11. Use of a composition according to any one of claims 1 to 9, as a dispersion agent, in particular as a solubilizing agent for pesticides such as an aryloxyphenoxypropionate.

12. Use of a composition according to claim 11, wherein said pesticide is Difenoconazole or Clodinafop-Propargyl.

13. Process for the synthesis of a composition according to any one of claims 1 to 9, said process comprising a step of mixing DMSO with said fatty acid methyl ester(s).
